# EUROPEAN PATENT APPLICATION

(11) **EP 1 734 761 A2**
(43) Date of publication of application: **20.12.2006**
(21) Application number: 06253066.2
(22) Date of filing: 13.06.2006
(51) Int. Cl.: H04N 5/74

(54) **Projection television apparatus**

(30) Priority: 14.06.2005 JP 2005174296
(71) Applicant: SONY CORPORATION, Tokyo 141 (JP)
(72) Inventor: Corn, Roger c/o Sony Corporation, Tokyo 141 (JP)
(74) Representative: Mills, Julia

(57) **Abstract**

A projection television apparatus includes: a frame; a screen; and a projector unit, for emitting an image projection light beam onto the screen; wherein said projector unit includes; illuminating means, image forming means for modulating light beams by image information, and a projection lens; an optical axis of the image projection light beam exiting from the image forming means is bent to an optical axis of the projection lens; the screen has horizontal upper or lower edges; a support mechanism for supporting the projector unit the frame rotatably around a first axial line orthogonal to the optical axis of the projection lens and parallel to the upper or lower edge of the screen is provided; a trapezoidal distortion adjusting mechanism for adjusting an angle of rotation around the first axial line of the projector unit is provided; and a securing mechanism for the projector unit with the frame is provided.

## Description

The present invention relates to the field of projection television apparatus.

A projection television apparatus is available, which includes a frame, a back projection screen attached to a front surface of the frame, and a projector unit, disposed in the frame, for emitting an image projection light beam onto a back surface of the back projection screen via a projection lens.

The projector unit is provided with image forming means including, e.g., transmissive liquid crystal display units, whereby light beams emitted from a light source are modulated by the liquid crystal display units on the basis of image information to generate the image projection light beam.

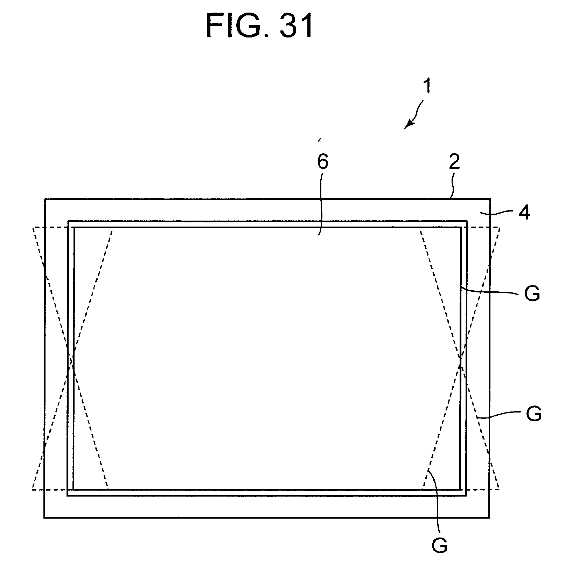

FIG. 31 is a front view of such a projection television apparatus 1. In a front surface 4 of a frame 2 is a rectangular screen 6, which is disposed with its long sides aligned with the horizontal direction and its short sides with the vertical direction.

In such a projection television apparatus, due to the projector unit being out of position with respect to the frame, as shown by broken lines in FIG. 31, upper and lower sides of the four sides of an image G projected onto the screen 2 are not equal to each other, with the upper side greater than the lower side, or vice versa. As a result, the image G suffers so-called trapezoidal distortion.

In order to overcome this situation, an adjusting technique has been proposed (see Patent Document 1), in which an adjusting mechanism having a fixed table secured to the frame 2 and a tilting table rotatably supported by this fixed table is provided. The projector unit is placed on the tilting table, and the tilting table is then oscillated for adjustment.

According to such a conventional technique, by oscillating the entire projector unit together with the tilting table, the trapezoidal distortion of the image G can be eliminated.
[Patent Document 1] Japanese Patent Application Publication No. 2000-10188

However, in this conventional technique, due to its adjusting mechanism involving individual adjustment of the four corners of the tilting table, its adjusting operation has been felt cumbersome, and in addition, there has been an inconvenience that the trapezoidal distortion cannot be eliminated easily.

The present invention has been made in view of such circumstances, and therefore, embodiments of the present invention seek to provide a projection television apparatus which is capable of reliably eliminating or at least reducing trapezoidal distortion of an image displayed on the screen with a simple operation.

Various respective aspects and features of the invention are defined in the appended claims. Features from the dependent claims may be combined with features of the independent claims as appropriate and not merely as explicitly set out in the claims.

Embodiments of the present invention provides a projection television apparatus which includes a frame, a screen of a back projection type attached to a front surface of the frame, and a projector unit, disposed in the frame, for emitting an image projection light beam. The projector unit includes illuminating means, image forming means for modulating light beams exiting from the illuminating means on the basis of image information whereby to generate the image projection light beam for exit therefrom, and a projection lens for projecting the image projection light beam onto the screen. An optical axis of the image projection light beam exiting from the image forming means is bent with respect to an optical axis of the projection lens. The screen has horizontally extending upper or lower edge at an upper or lower end thereof. In the projection television apparatus, a support mechanism for supporting the projector unit with respect to the frame rotatably around a first axial line orthogonal to the optical axis of the projection lens and paralleling the upper or lower edge of the screen is provided. A trapezoidal distortion adjusting mechanism for adjusting an angle of rotation around the first axial line, of the projector unit is provided. A securing mechanism for loosening and tightening the projector unit with respect to the frame is provided.

According to the present invention, trapezoidal distortion can be eliminated or at least reduced reliably with a simple adjusting operation, using the support mechanism, the trapezoidal distortion adjusting mechanism, and the securing mechanism.

Furthermore, unlike the complicated adjusting mechanism involving individual adjustment of the four corners of the titling table as in the conventional example, each of the support mechanism, the trapezoidal distortion adjusting mechanism, and the securing mechanism has a simple configuration.

Further features of embodiments of the invention, and the advantages offered thereby, are explained in detail hereinafter, in reference to specific embodiments of the invention illustrated in the accompanying drawings.

The invention will now be described by way of example with reference to the accompanying drawings, throughout which like parts are referred to by like references, and in which:
FIGS. 1A, 1B are a front view and a side view respectively showing a projection television apparatus 100 according to a first embodiment of the present invention;
FIG. 2 is an exploded perspective view of the projection television apparatus 100;
FIG. 3 is a block diagram showing a configuration of electronics of the projection television apparatus 100;
FIG. 4 is a perspective view of a projector unit 10;
FIG. 5 is a plan view of the projector unit 10;
FIG. 6 is a front view of the projector unit 10;
FIG. 7 is a diagram for explaining a configuration of the projector unit 10;
FIG. 8 is a plan view of a light source side unit 10A;
FIG. 9 is a front view of the light source side unit 10A;
FIG. 10 is a perspective view of an image emergence side unit 10B;
FIG. 11 is another perspective view of the image emergence side unit 10B;
FIG. 12 is a plan view of the image emergence side unit 10B;
FIG. 13 is a front view of the image emergence side unit 10B;
FIG. 14 is a bottom view of the image emergence side unit 10B;
FIG. 15 is a perspective view of a liquid crystal display unit;
FIG. 16 is a perspective view of an eccentric pin 29;
FIG. 17 is a plan view of the eccentric pin 29;
FIG. 18 is a front view of the eccentric pin 29;
FIG. 19 is a bottom view of the eccentric pin 29;
FIG. 20 is a perspective view of a base member 28;
FIG. 21 is another perspective view of the base member 28;
FIG. 22 is a perspective view of a mounting plate 60;
FIG. 23 is another perspective view of the mounting plate 60;
FIG. 24 is a perspective view of a holder 70;
FIG. 25 is another perspective view of the holder 70;
FIG. 26 is a perspective view of an eccentric pin 80;
FIG. 27 is a front view of the eccentric pin 80;
FIG. 28 is a bottom view of the eccentric pin 80;
FIG. 29 is a diagram for explaining image adjustment by rotation;
FIG. 30 is a diagram for explaining a configuration of a projector unit 10 in a second embodiment; and
FIG. 31 is a front view of a conventional projection television apparatus.

### (First Embodiment)

Projection television apparatus according to embodiments of the present invention will be described below in detail with reference to the drawings.

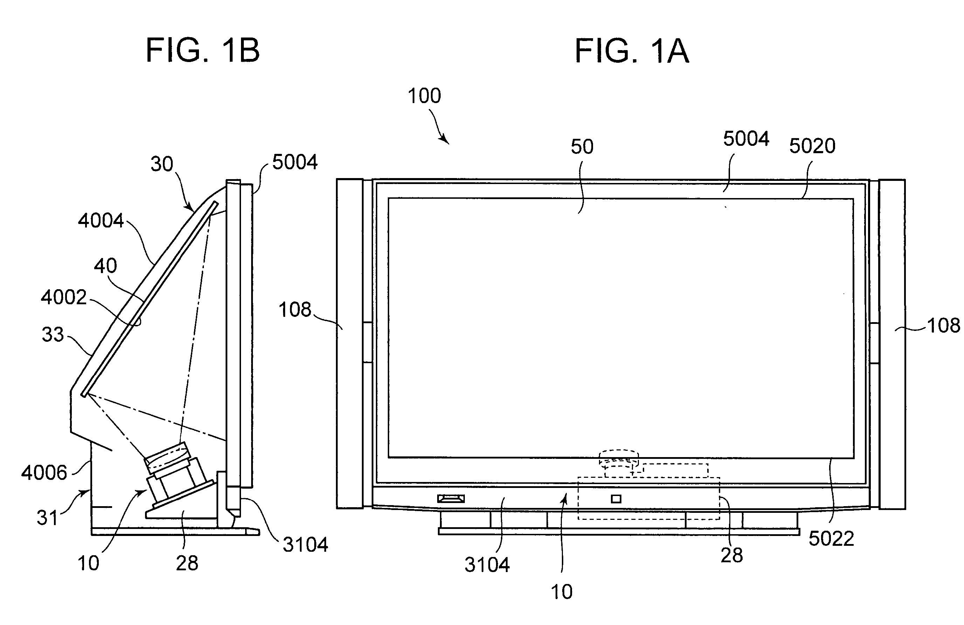

FIGS. 1A, 1B are a front view and a side view respectively showing a projection television apparatus 100 according to a first embodiment.

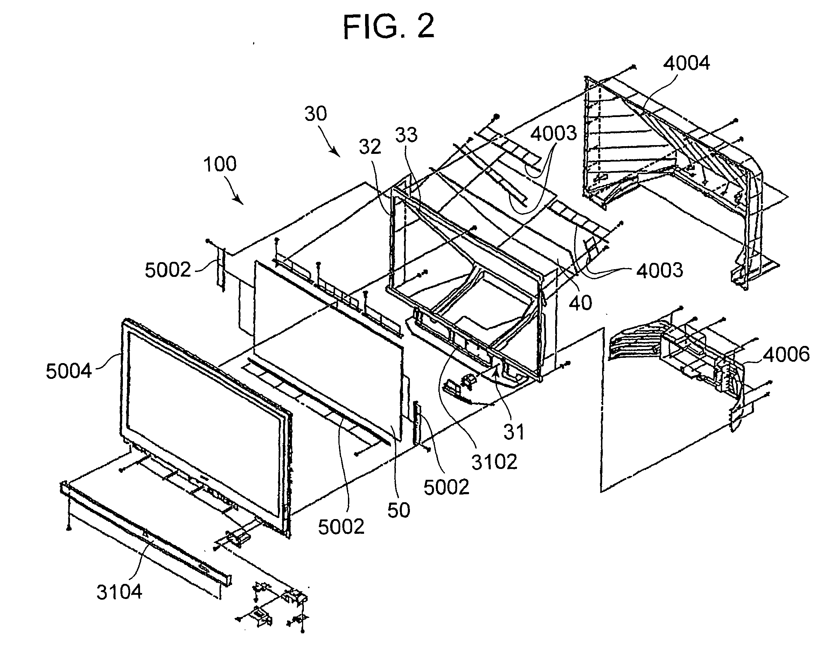

FIG. 2 is an exploded perspective view of the projection television apparatus 100.

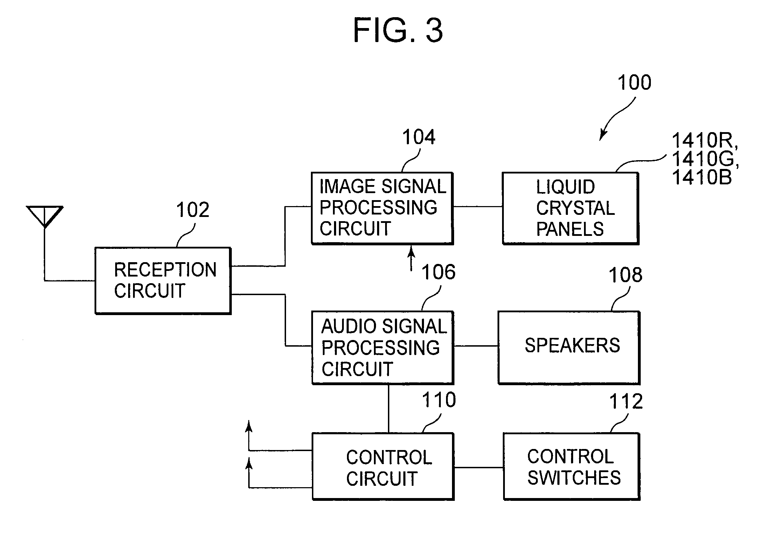

FIG. 3 is a block diagram showing a configuration of electronics of the projection television apparatus 100.

First, a configuration of the projection television apparatus 100 will be described.

As shown in FIGS. 1A, 1B, the projection television apparatus 100 includes a frame 30, and the frame 30 is provided with a projector unit 10, a reflecting mirror 40, and a back projection screen 50.

The projector unit 10 emits an image projection light beam.

The reflecting mirror 40 has a reflecting surface 4002, disposed above the projector unit 10 and behind the back projection screen 50, and reflects the image projection light beam emitted from the projector unit 10 onto a back surface of the screen 50.

The screen 50 displays television images on a front surface thereof by the image projection light beam reflected by the reflecting mirror 40 being projected onto its back surface. As shown in FIG. 1A, the screen 50 has an upper edge 5020 and a lower edge 5022 spaced apart from each other vertically and extending in parallel with each other horizontally.

The screen 50 is formed of, e.g., a Fresnel lens disposed on a video source side, and a lenticular screen disposed downstream of the Fresnel lens. Furthermore, another screen may additionally be provided for reducing contrast degradation due to external light and protecting the lenticular screen.

As shown in FIG. 2, the frame 30 includes a bottom cabinet 31 for holding the projector unit 10 therein, a rectangular frame-shaped screen mounting portion 32 disposed above the bottom cabinet 31, and an inverted trapezoidal reflecting mirror mounting portion 33 disposed above the bottom cabinet 31 and behind the screen mounting portion 32.

The screen 50 is attached to the screen mounting portion 32 via upper/lower/left/right mounting members 5002 and screws, and a frame-shaped exterior plate 5004 is also attached to the screen mounting portion 32 in a manner covering the peripheries of the mounting members 5002 and the screen 50.

Furthermore, at a front portion of the frame 30 which is below the screen mounting portion 32, a front portion 3102 of the bottom cabinet 31 is positioned, and an exterior plate 3104 is attached below the frame-shaped exterior plate 5004 in a manner covering the front portion 3102.

The reflecting mirror 40 is attached to the reflecting mirror mounting portion 33 via upper/lower/left/right mounting members 4003 and screws, and an upper rear cover 4004 is attached to the frame 30 in a manner covering the mounting members 4003 and the reflecting mirror 40.

The projector unit 10 is disposed behind the front portion 3102 of the bottom cabinet 31, and a lower rear cover 4006 is attached to the frame 30 in a manner covering the projector unit 10 and the like.

Note that in FIG. 1A, reference numeral 108 denotes left and right speakers.

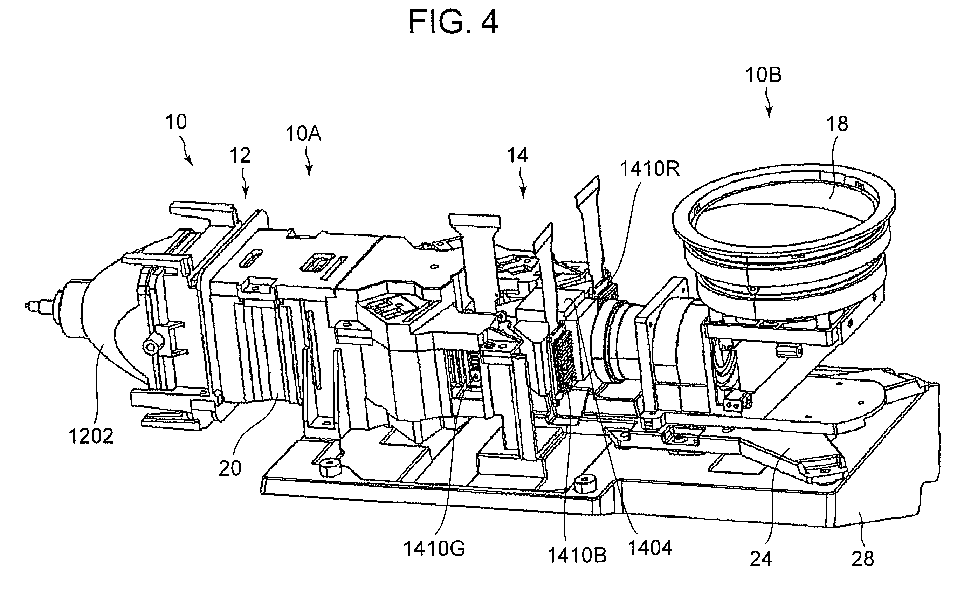

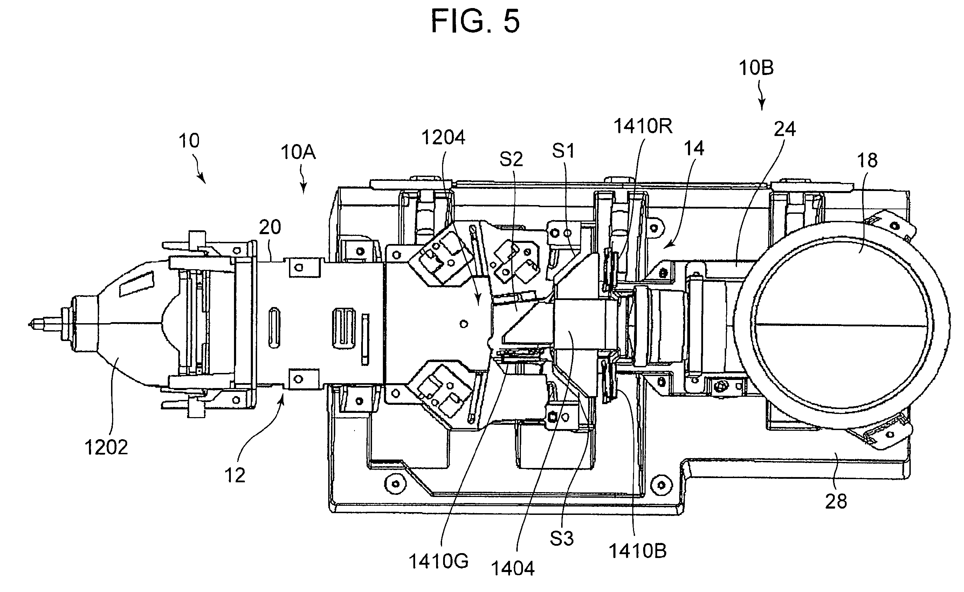

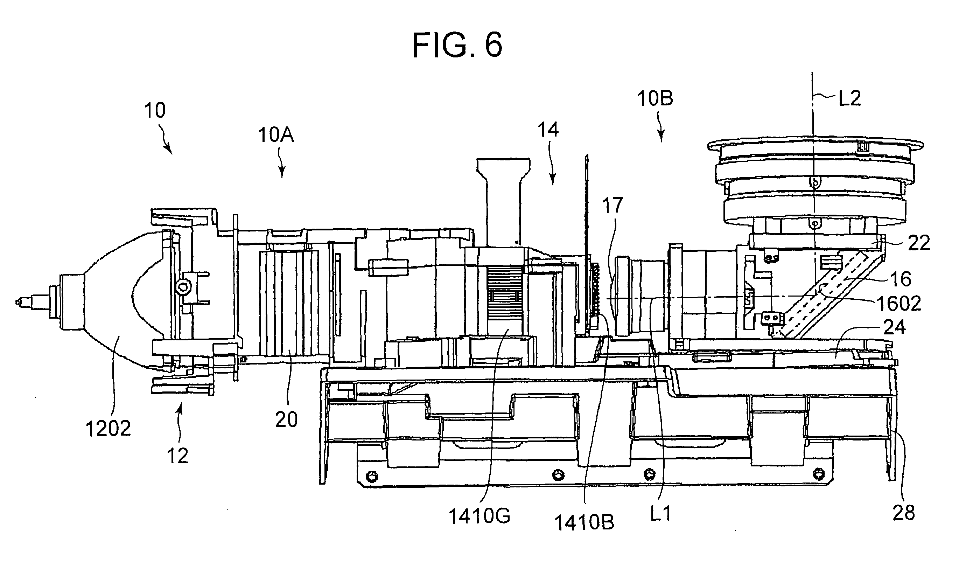

FIG. 4 is a perspective view of the projector unit 10; FIG. 5 is a plan view of the projector unit 10; and FIG. 6 is a front view of the projector unit 10.

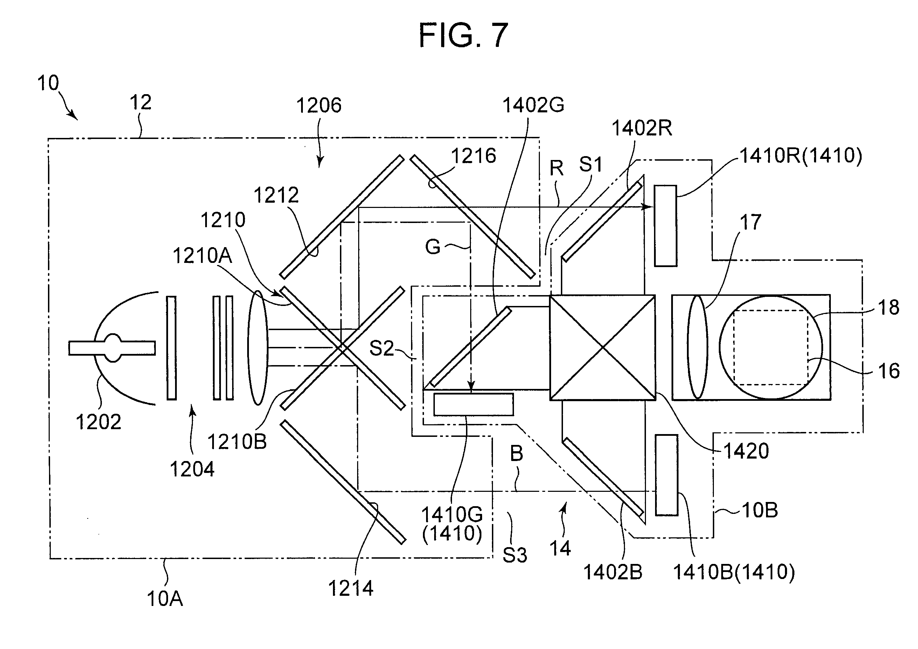

FIG. 7 is a diagram for explaining a configuration of the projector unit 10.

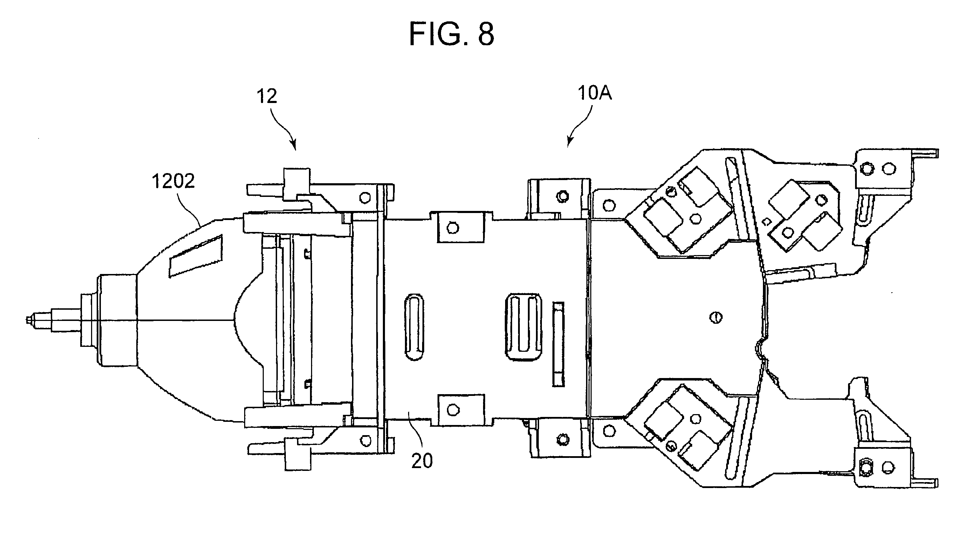

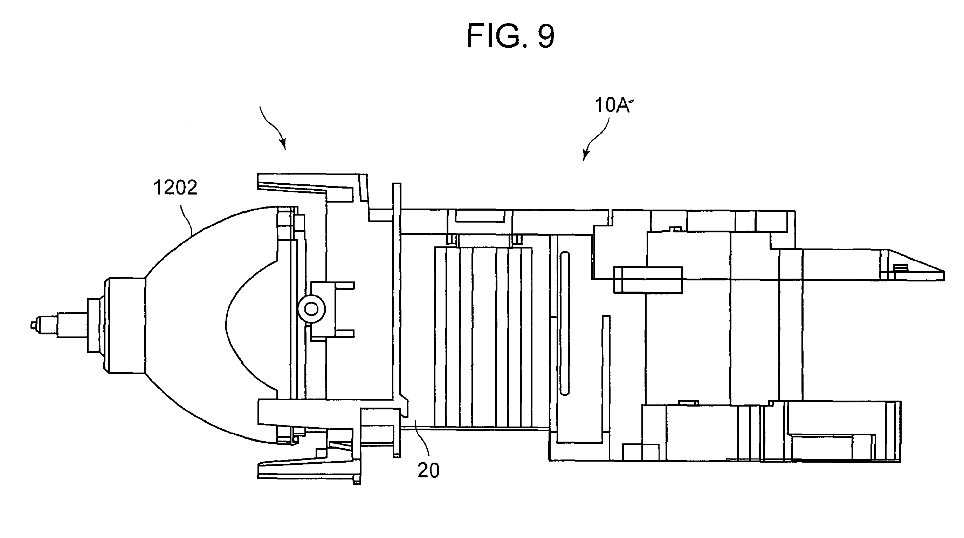

FIG. 8 is a plan view of a light source side unit 10A, and FIG. 9 is a front view of the light source side unit 10A.

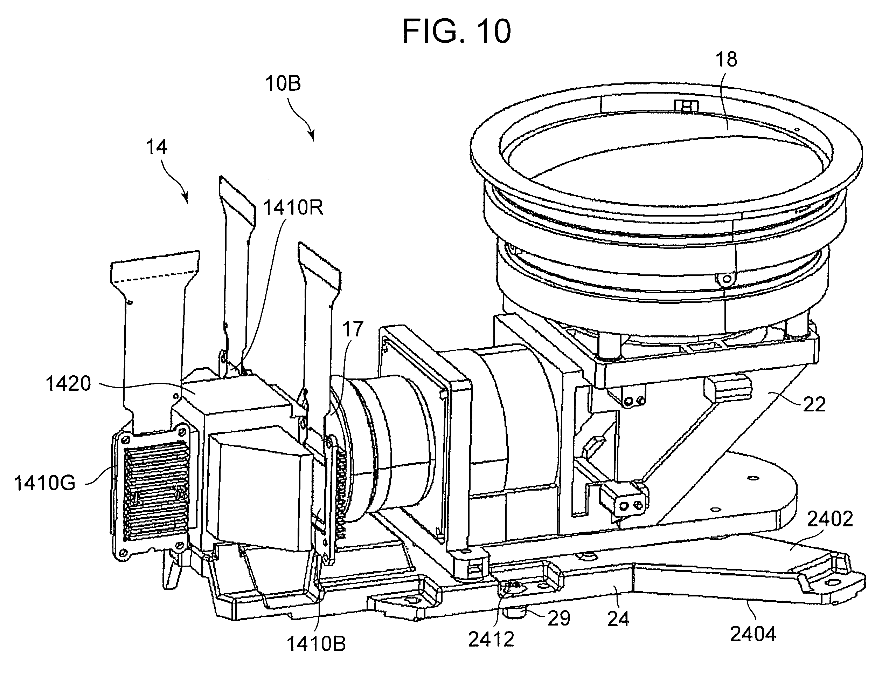

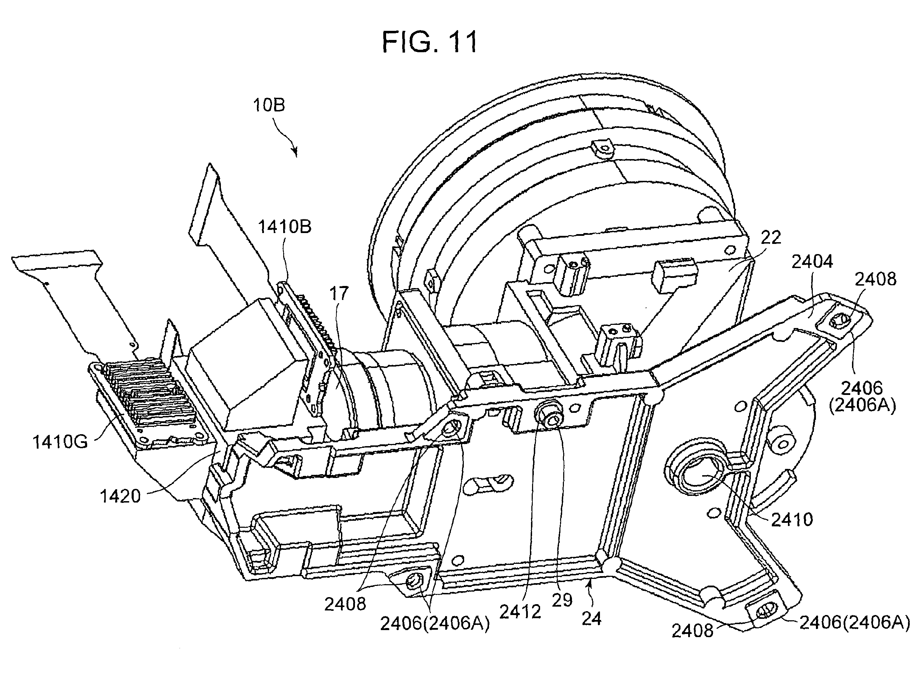

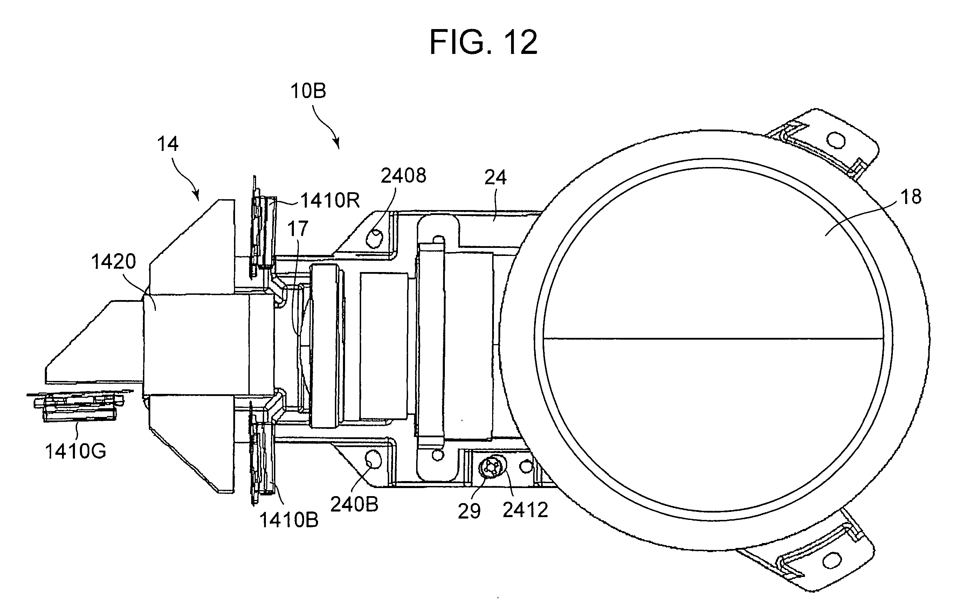

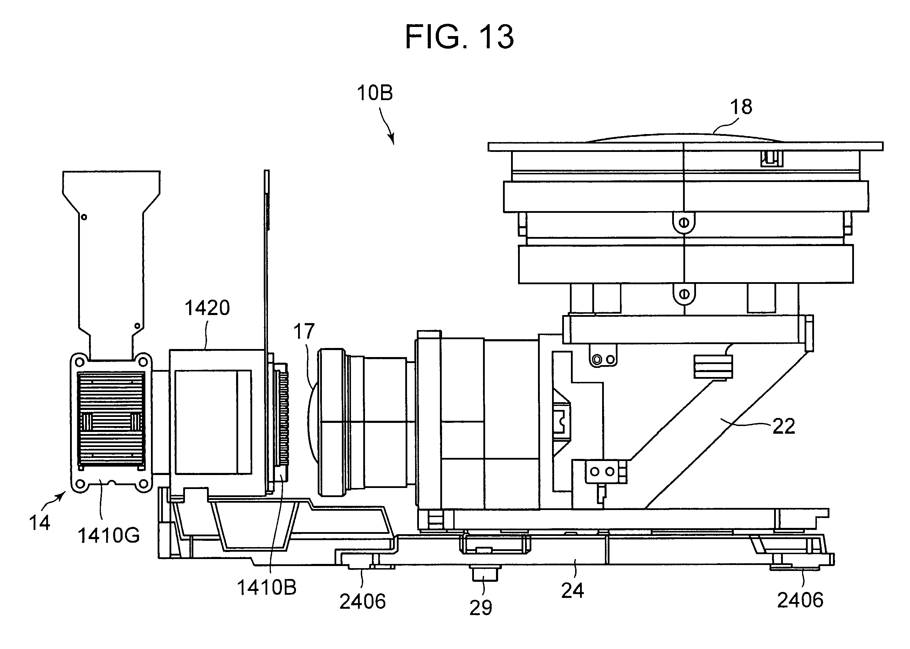

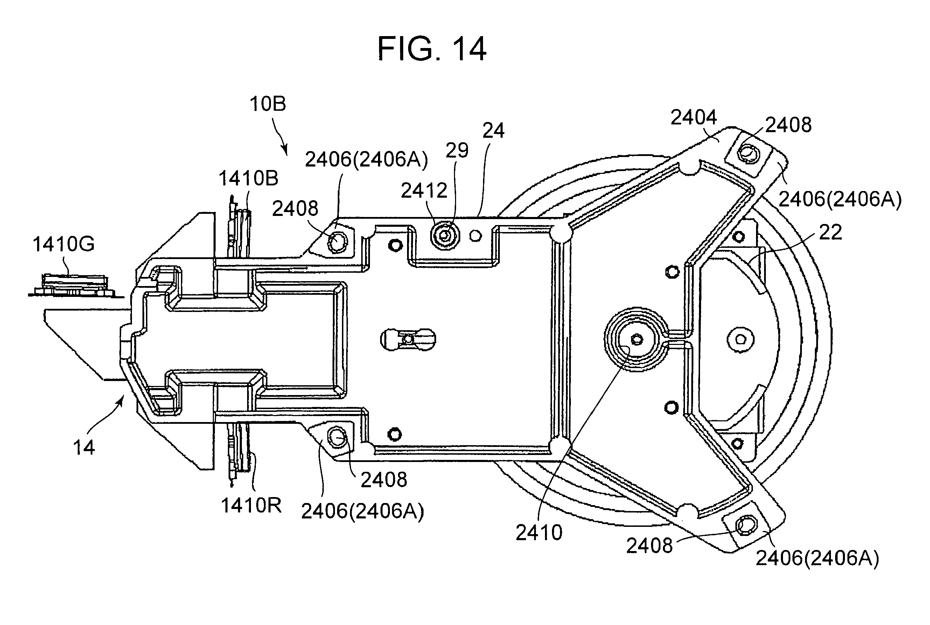

FIGS. 10, 11 are perspective views of an image emergence side unit 10B; FIG. 12 is a plan view of the image emergence side unit 10B; FIG. 13 is a front view of the image emergence side unit 10B; and FIG. 14 is a bottom view of the image emergence side unit 10B.

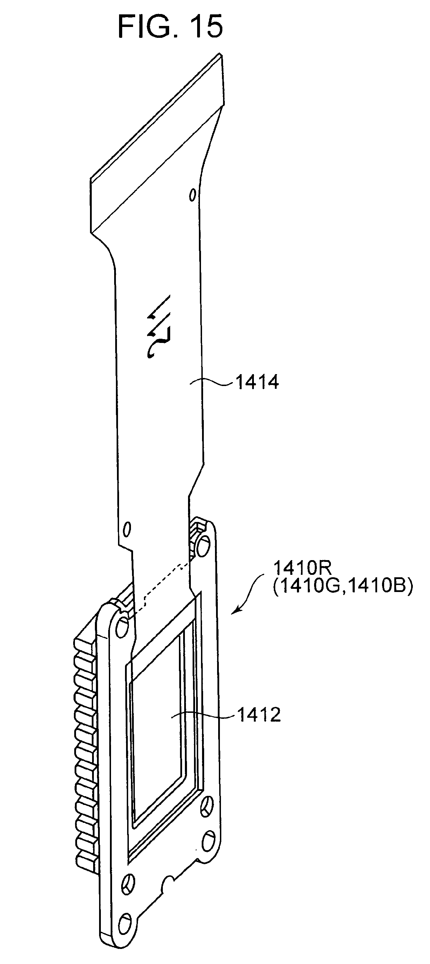

FIG. 15 is a perspective view of a liquid crystal display unit.

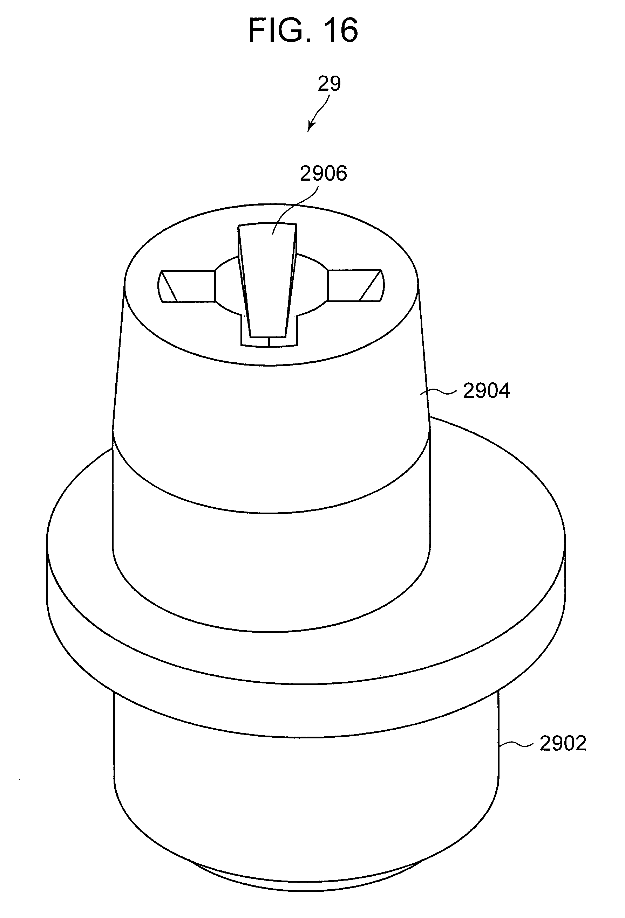

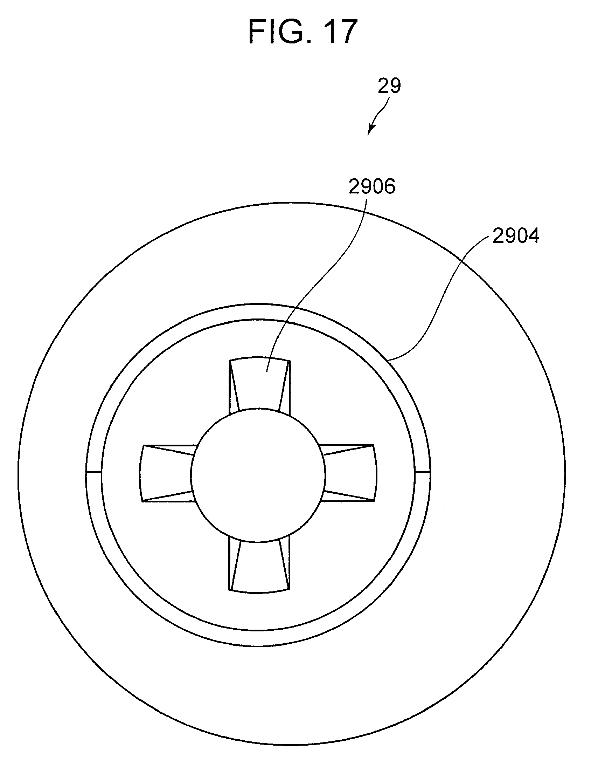

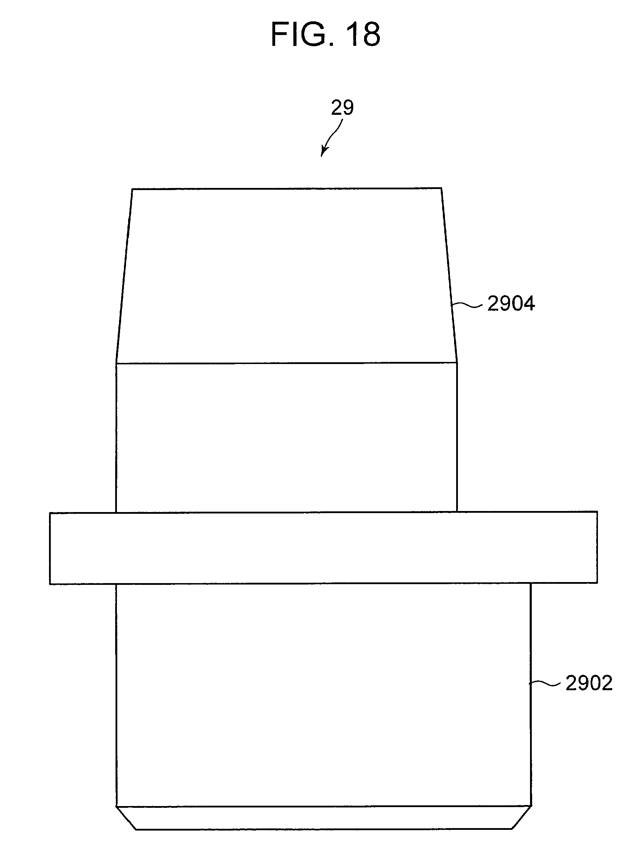

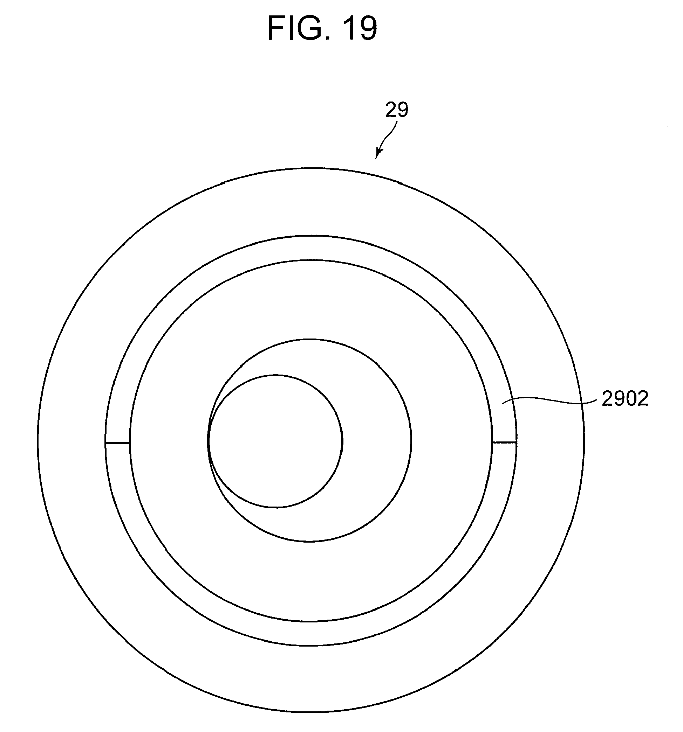

FIG. 16 is a perspective view of an eccentric pin 29; FIG. 17 is a plan view of the eccentric pin 29; FIG. 18 is a front view of the eccentric pin 29; and FIG. 19 is a bottom view of the eccentric pin 29.

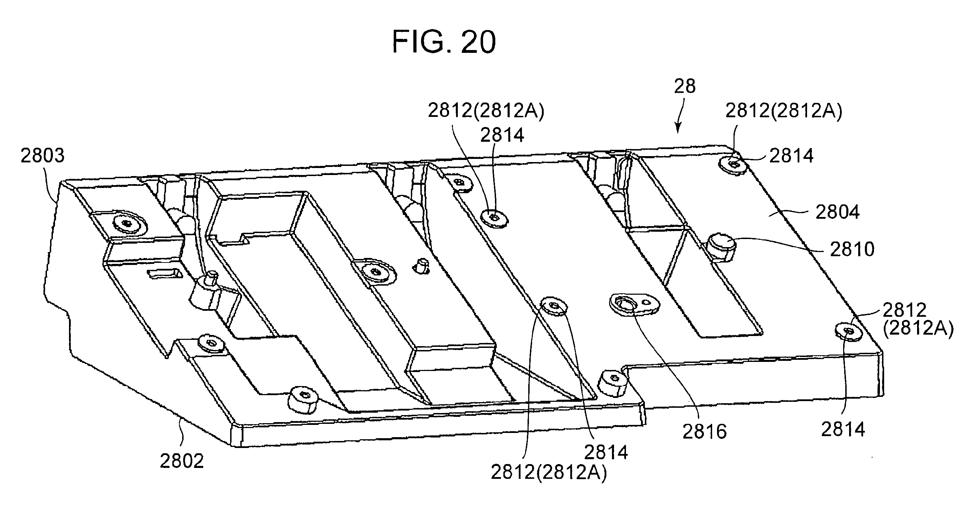

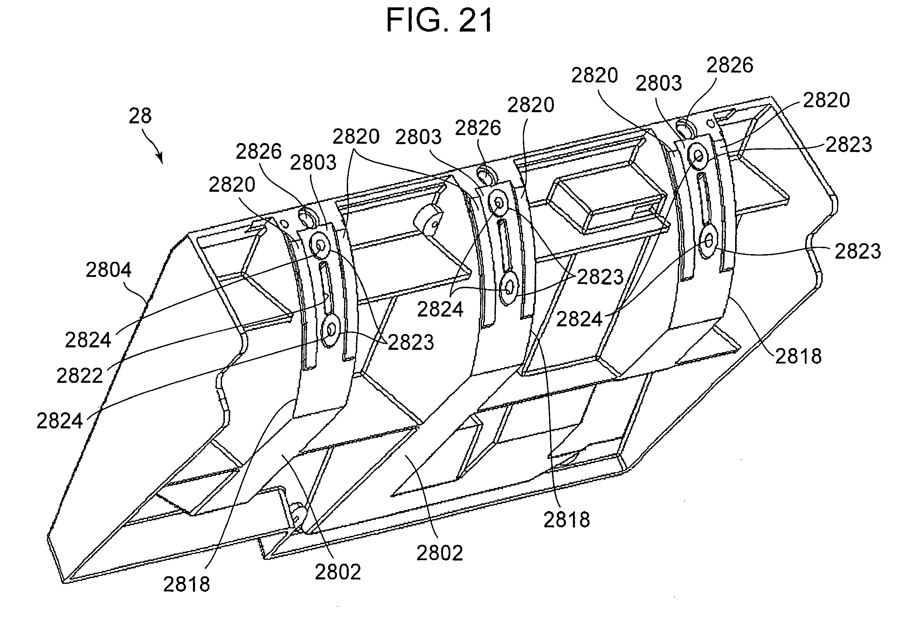

FIGS. 20, 21 are perspective views of a base member 28.

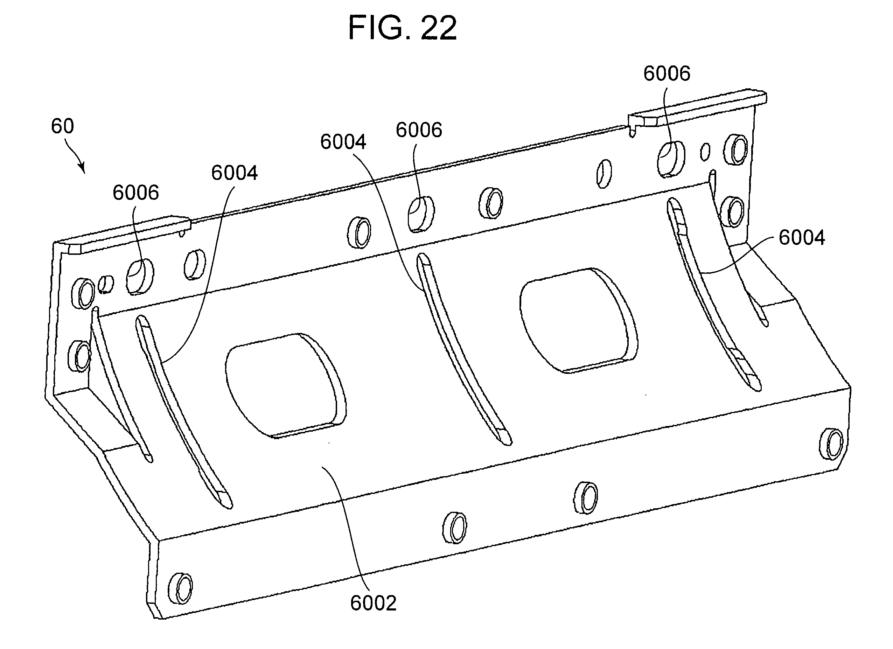

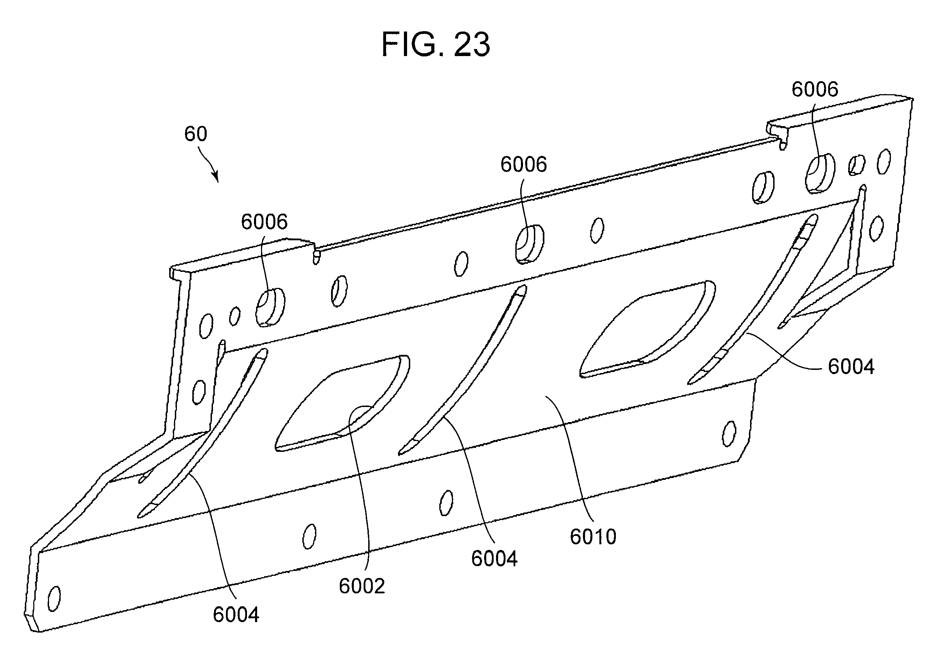

FIGS. 22, 23 are perspective views of a mounting plate 60.

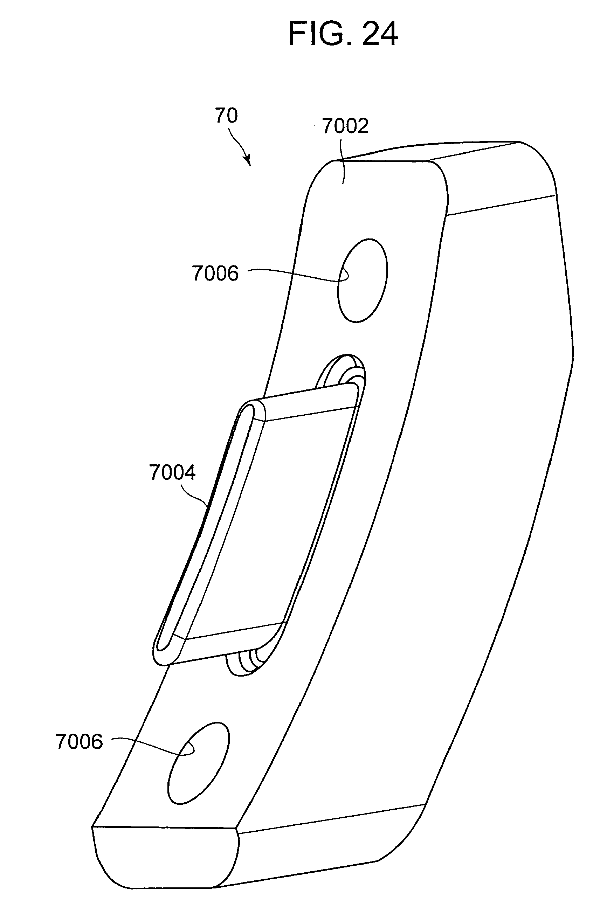

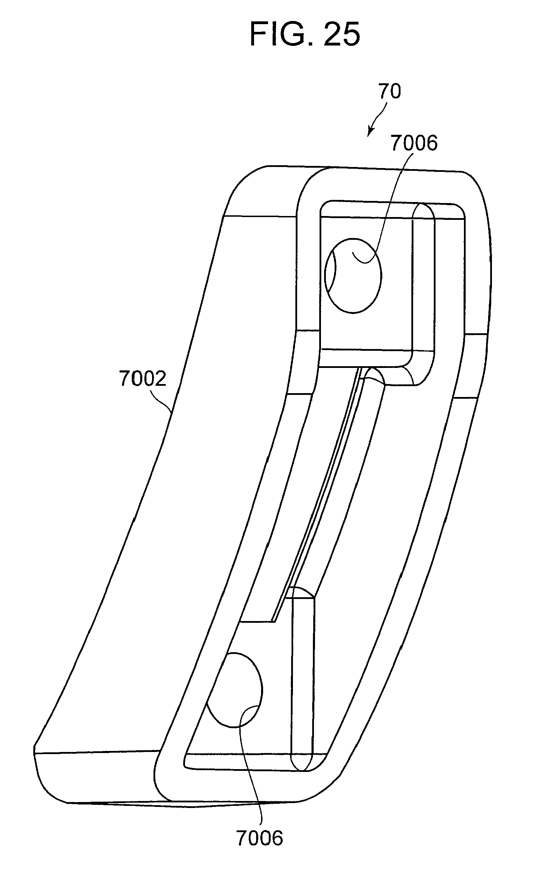

FIGS. 24, 25 are perspective views of a holder 70.

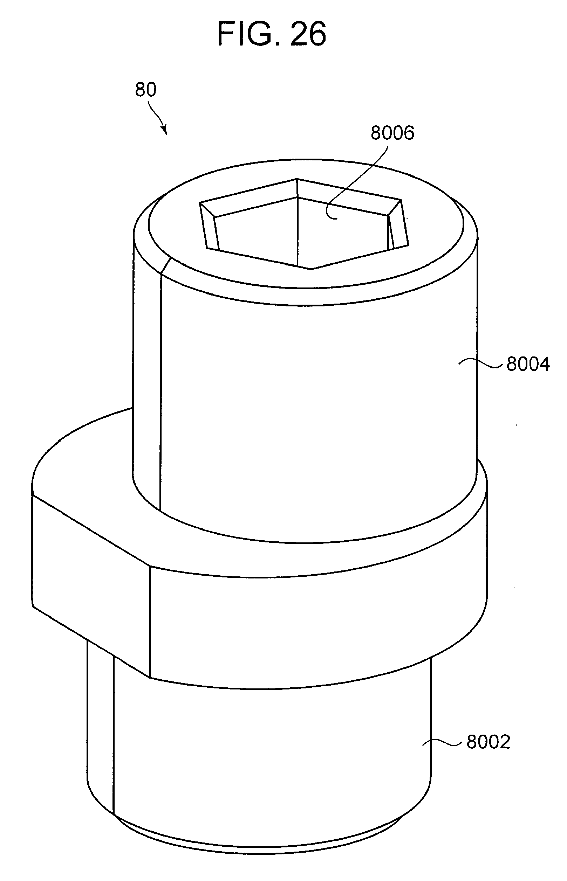

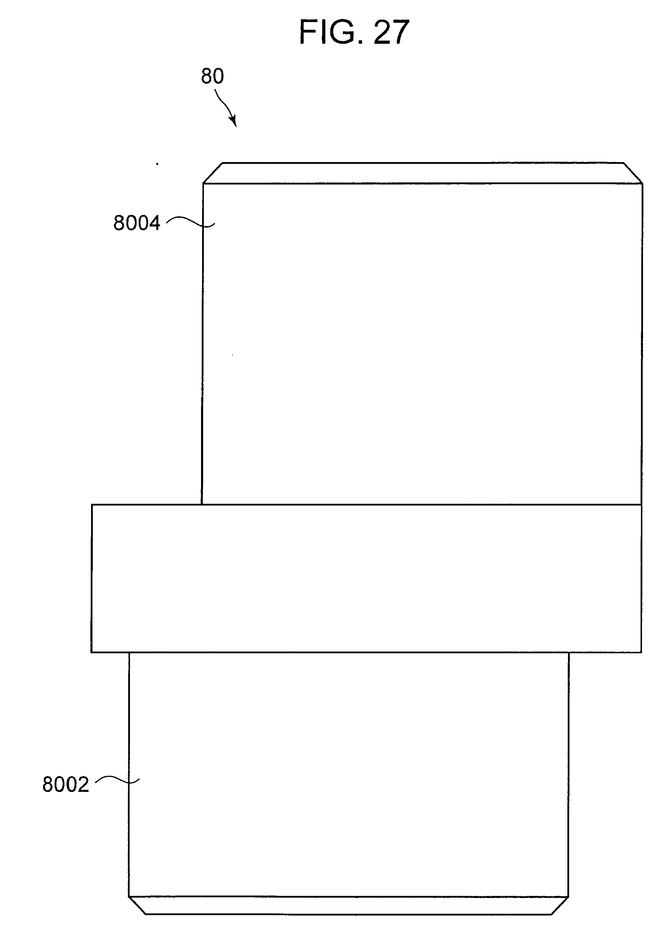

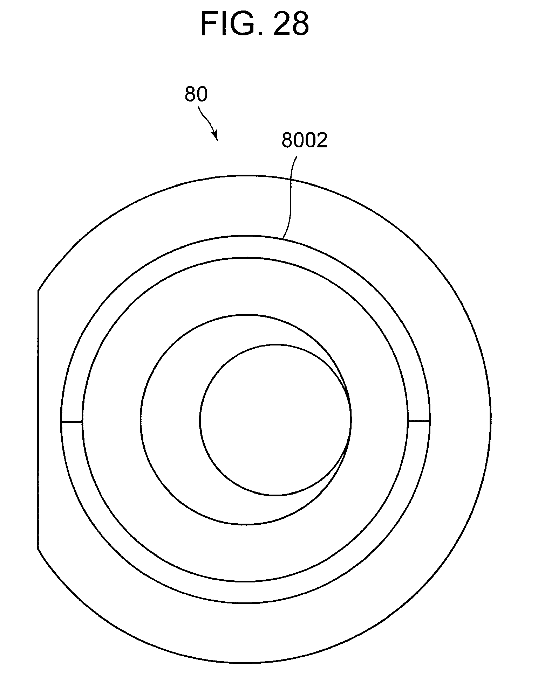

FIG. 26 is a perspective view of an eccentric pin 80; FIG. 27 is a front view of the eccentric pin 80; and FIG. 28 is a bottom view of the eccentric pin 80.

As shown in FIGS. 4-7, the projector unit 10 includes illuminating means 12, image forming means 14, a reflecting mirror 16, an incidence lens 17, and a projection lens 18.

The illuminating means 12 emits light beams for three colors, red (R), green (G), blue (B), onto the image forming means 14, and the image forming means 14 modulates the three color light beams on the basis of image information respectively corresponding to the three colors, for synthesis into a single image projection light beam. The image projection light beam is emitted onto the reflecting mirror 40 via the reflecting mirror 16 and the projection lens 18, for projection onto the back surface of the screen 50 by the reflecting mirror 40, whereby a color image is projected on the front surface of the screen 50.

In the present embodiment, as shown in FIG. 7, the illuminating means 12 includes a light source 1202 for emitting white light, illuminating optics 1204, and color separating optics 1206, and the light source 1202, illuminating optics 1204, color separating optics 1206 are accommodated in a first housing 20.

As shown in FIGS. 8, 9, a light source side unit 10A is formed of the illuminating means 12 and the first housing 20.

As shown in FIG. 7, the illuminating optics 1204 include a concave lens, a UV cut filter, and a condenser lens which are disposed linearly in front of the light source 1202, and are configured such that the white light from the light source 1202 passes through these components to enter the color separating optics 1206.

The color separating optics 1206 separate a beam of light (white light) guided from the illuminating optics 1204 into the R, G, B three color light beams.

In the present embodiment, the color separating optics 1206 include a cross dichroic mirror 1210, first and second mirrors 1212, 1214, and a dichroic mirror 1216.

The cross dichroic mirror 1210 is formed of a dichroic mirror 1210A and a dichroic mirror 1210B coupled to each other in a manner crossing at 90°. The dichroic mirror 1210A transmits the red (R) and green (G) light beams therethrough, and reflects the blue (B) light beam, of the light beams guided from the illuminating optics 1204. The dichroic mirror 1210B reflects the red (R) and green (G) light beams, and transmits the blue (B) light beam therethrough, of the light beams guided from the illuminating optics 1204.

The dichroic mirror 1216 transmits the red (R) light beam therethrough, and reflects the green (G) light beam.

Therefore, the light beams guided from the illuminating optics 1204 to the cross dichroic mirror 1210 are separated into two groups of light beams, namely, the red (R) and green (G) light beams, and the blue (B) light beam, by the cross dichroic mirror 1210.

The red (R) and green (G) light beams separated by the cross dichroic mirror 1210 are guided to the dichroic mirror 1216 via the first mirror 1212. The dichroic mirror 1216 transmits the red (R) light beam therethrough, and reflects the green (G) light beam.

Furthermore, the blue (B) light beam separated by the cross dichroic mirror 1210 is reflected by the second mirror 1214.

In this way, the R, G, B light beams separated by the color separating optics 1206 are each emitted onto the image forming means 14 from the illuminating means 12.

As shown in FIG. 7, the image forming means 14 includes first to third beam splitters 1402R, 1402G, 1402B, three reflective liquid crystal display units (liquid crystal panels) 1410 (1410R, 1410G, 1410B) for displaying the image information for R, G, B, respectively, and a cross dichroic prism 1420 for synthesizing the light beams respectively reflected by the corresponding liquid crystal display units 1410 and thereby modulated on the basis of the corresponding three color image information to generate a single image projection light beam.

The first to third beam splitters 1402R, 1402G, 1402B, three liquid crystal display units 1410R, 1410G, 1410B, and cross dichroic prism 1420 are coupled integrally.

The first to third beam splitters 1402R, 1402G, 1402B each have a function of reflecting or transmitting light depending on a light deflecting direction.

Furthermore, as shown in FIGS. 5, 7, between the beam splitters 1402R, 1402G, 1402B of the image forming means 14 and portions of the illuminating means 12 faced by these first to third beam splitters 1402R, 1402G, 1402B are clearances S1, S2, S3, respectively, whereby the image forming means 14 does not interfere with the illuminating means 12 due to play.

As shown in FIG. 15, the liquid crystal display units 1410R, 1410G, 1410B each are rectangular plate-shaped and have a rectangular display surface 1412 for displaying an image on one of the surfaces as viewed thicknesswise, and further have a flexible board 1414 for supplying an image signal (drive signal) and power for displaying the image on the display surface 1412.

As shown in FIG. 7, the red (R) light beam exiting from the illuminating means 12 to the image forming means 14 passes through the first beam splitter 1402R to enter the red liquid crystal display unit 1410R, where the incident red light beam is reflected and thereby modulated on the basis of the corresponding image information, after which the modulated red light beam is again reflected by the first beam splitter 1402R to be guided to the cross dichroic prism 1420.

The green (G) light beam exiting from the illuminating means 12 to the image forming means 14 passes through the second beam splitter 1402G to enter the green liquid crystal display unit 1410G, where the incident green light beam is reflected and thereby modulated on the basis of the corresponding image information, after which the modulated green light beam is again reflected by the second beam splitter 1402G to be guided to the cross dichroic prism 1420.

The blue (B) light beam exiting from the illuminating means 12 to the image forming means 14 passes through the third beam splitter 1402B to enter the blue liquid crystal display unit 1410B, where the incident blue light beam is reflected and thereby modulated on the basis of the corresponding image information, after which the modulated blue light beam is again reflected by the second beam splitter 1402B to be guided to the cross dichroic prism 1420.

The three color light beams guided to the cross dichroic prism 1420 are synthesized by the cross dichroic prism 1420 into a single image projection light beam.

Note that the example in which the image forming means 14 is formed of the first to third beam splitters 1402R, 1402G, 1402B, three reflective liquid crystal display units 1410R, 1410G, 1410B, and cross dichroic prism 1420 has been described in the present embodiment, the image forming means 14 is not limited to this embodiment, but may, of course, include various known configurations.

In the present embodiment, as shown in FIG. 6, the reflecting mirror 16, incidence lens 17, and projection lens 18 are assembled into a second housing 22.

The second housing 22 is integrally coupled to a support block 24, and so is the image forming means 14.

These reflecting mirror 16, incidence lens 17, projection lens 18, second housing 22, and image forming means 14 form an image emergence side unit 10B. The image emergence side unit 10B and the light source side unit 10A are independent bodies. The former is separated from the latter.

In other words, a part extending from the image forming means 14 to the projection lens 18 is separated from the light source side unit 10A which is a remaining part of the projector unit 10 excluding the part extending from the image forming means 14 to the projection lens 18, and the components in the part extending from the image forming means 14 to the projection lens 18 are integrally coupled to form the image emergence side unit 10B.

The incidence lens 17 is a lens into which the above-mentioned image projection light beam guided from the cross dichroic prism 1420 enters.

The reflecting mirror 16 is disposed such that a reflecting surface 1602 thereof slopes up to form an angle of 45° with an optical axis of the incidence lens 17.

The projection lens 18 is disposed above the reflecting mirror 16 such that an optical axis thereof forms an angle of 45° with the reflecting surface 1602.

That is, as shown in FIG. 6, an optical path of the image projection light beam extending from the image forming means 14 to the projection lens 18 is formed of a first optical path L1 linearly extending from the image forming means 14, a second optical path L2 aligned with the optical axis of the projection lens 18, and the reflecting surface 1602, disposed at a location where these optical paths L1, L2 cross, for bending these optical paths L1, L2. An angle which the first optical path L1 forms with the second optical path L2 equals 90°.

Therefore, the image projection light beam guided from the cross dichroic prism 1420 is bent 90° upwards by the reflecting surface 1602 through the incidence lens 17, enters the reflecting mirror 40 via the projection lens 18, and then is projected for image formation onto the back surface of the screen 50 by the reflecting mirror 40, whereby a color image is formed on the front surface of the screen 50.

As shown in FIGS. 10-13, the support block 24 has a length extending from the image forming means 14 to the projection lens 18, and the image forming means 14 and the second housing 22 are attached to an upper surface 2402 of the support block 24.

A lower surface 2404 of the support block 24 has a bearing hole 2410 formed therein, and also, mounting seats 2406 are formed at four lower surface 2404 locations around the bearing hole 2410, in a manner protruding from the lower surface 2404. Lower surfaces of these mounting seats 2406 are formed as supported surfaces 2406A to be supported by the frame 30.

In the mounting seats 2406, there are formed elongated holes 2408 which circumferentially extend around the bearing hole 2410.

Also, an eccentric pin insertion hole 2412 is formed at a support block 24 location distant from the bearing hole 2410.

Electronics of the projection television apparatus 100 will be described.

As shown in FIG. 3, the projection television apparatus 100 includes a reception circuit 102, an image signal processing circuit 104, an audio signal processing circuit 106, the speakers 108, a control circuit 110, control switches 112, and also the above-mentioned liquid crystal display units 1410R, 1410G, 1410B.

The reception circuit 102 selects channels on the basis of commands from the control circuit 110, demodulates a television signal received via an antenna, and separates the signal into an image signal and a audio signal for output.

The image signal processing circuit 104 performs necessary signal processing on the image signal to generate image information for R, G, B, and supplies image signals (drive signals) corresponding to the image information to the three liquid crystal display units 1410R, 1410G, 1410B, respectively.

The audio signal processing circuit 106 performs necessary signal processing and amplification processing on the audio signal to generate an audio signal for supply to the speakers 108. As a result, sounds are outputted from the speakers 108.

The control switches 112 serve to perform various control and setting involved to view broadcasts by the projection television apparatus 100. For example, a channel selection switch, a volume control switch, an input selection switch and the like are included.

The control circuit 110 controls the reception circuit 102, image signal processing circuit 104, and audio signal processing circuit 106 on the basis of control by the corresponding control switches 112.

Although not shown, there are also provided external input terminals for inputting image and audio signals supplied from an external apparatus, such as a DVD player or a videocassette recorder, and an input switching circuit for inputting by switching the image and audio signals supplied to these external input terminals, to the image signal processing circuit 104 and the audio signal processing circuit 106, respectively.

It is configured such that the image and audio signals supplied to the external input terminals are fed to the image signal processing circuit 104 and the audio signal processing circuit 106 via the input switching circuit through control by the corresponding control switch 112.

As shown in FIG. 1, the projector unit 10 is attached to the frame 30 via a base member 28 and a mounting plate 60 (see FIGS. 22, 23). More specifically, both the light source side unit 10A and the image emergence side unit 10B are attached to the base member 28, and are attached to the frame 30 via the base member 28 and the mounting plate 60. In other words, both the first housing 20 and the support block 24 are attached to the frame 30 via the base member 28 and the mounting plate 60.

As shown in FIGS. 20, 21, the base member 28 includes bottom surfaces 2802 facing the bottom of the frame 30, an upper surface 2804 so sloping with respect to the bottom surface 2802 as to face a relatively upper rear portion of the frame 30, and front surfaces 2803 uniting the bottom surfaces 2802 and the upper surface 2804.

The base member 28 is secured at its front surfaces 2803 to the bottom cabinet 31 (frame 30) via the mounting plate 60.

A shaft 2810 coaxial with the optical axis of the projection lens 18 projects from the upper surface 2804 of the base member 28, i.e., from the frame 30 side. Four bosses 2812 project at four upper surface 2804 locations around the shaft 2810. Upper faces of these bosses 2812 are formed as support surfaces 2812A extending along a plane orthogonal to the optical axis of the projection lens 18.

In the present embodiment, a screw hole 2814 is formed in the center of each of the bosses 2812.

Furthermore, an eccentric pin insertion hole 2816 is formed at a base member 28 location corresponding to the eccentric pin insertion hole 2412 of the support block 24.

In the present embodiment, as shown in FIG. 21, three protrusions 2818 are formed on a front side of the base member 28 at intervals in a left-right direction.

The vertically extending front surfaces 2803 are formed of portions of these protrusions 2818 facing frontwards, respectively. Each of the front surfaces 2803 is formed so as to extend over a cylindrical surface formed around a first axial line orthogonal to the optical axis of the projection lens 18 (the second optical path L2 in FIG. 6) and paralleling the upper edge 5020 or the lower edge 5022 of the screen 50.

In the middle of each front surface 2803 as viewed in the left-right direction, a vertically extending elongated hole 2822 is formed, and further, supported surfaces 2820 are formed at both left and right sides of the elongated hole 2822.

The supported surfaces 2820 are formed so as to extend over the cylindrical surface formed around the first axial line orthogonal to the optical axis of the projection lens 18 (the second optical path L2 in FIG. 6) and paralleling the upper edge 5020 or the lower edge 5022 of the screen 50.

Furthermore, mounting seats 2823 are formed so as to face the upper and lower ends of each elongated hole 2822, and each of these mounting seats 2823 has a screw hole 2824 formed therein.

Furthermore, at a portion of each front surface 2803 which is above the elongated hole 2822, an eccentric pin insertion hole 2826 is formed.

As shown in FIGS. 22, 23, the mounting plate 60 is a member to be securely attached to the front portion 3102 of the bottom cabinet 31. A support surface 6002 is provided on the mounting plate 60.

Similarly to the supported surfaces 2820, the support surface 6002 is formed so as to extend over the cylindrical surface formed around the first axial line orthogonal to the optical axis of the projection lens 18 (the optical path L2 in FIG. 6) and paralleling the upper edge 5020 or the lower edge 5022 of the screen 50.

In the support surface 6002, elongated holes 6004 aligned with the elongated holes 2822 are formed so as to extend vertically.

Furthermore, eccentric pin insertion holes 6006 are formed at support surface 6002 locations above the elongated holes 6004, respectively.

Note that a surface opposite to the support surface 6002 is formed as a front surface 6010 facing a front side of the projection television apparatus 100.

The support block 24 is attached to the base member 28 as follows.

As shown in FIGS. 11, 20, the lower surface 2404 of the support block 24 is arranged to face the upper surface 2804 of the base member 28, to insert the shaft 2810 of the base member 28 into the bearing hole 2410 of the support block 24, and also to place the mounting seats 2406 of the support block 24 on the corresponding bosses 2812 of the base member 28.

As a result, the supported surfaces 2406A of the support block 24 are placed on the corresponding support surfaces 2812A of the base member 28, whereby the elongated holes 2408 of the support block 24 face the corresponding screw holes 2814 of the base member 28, respectively.

Here, an eccentric pin 29 is inserted into both the eccentric pin insertion hole 2412 of the support block 24 and the eccentric pin insertion hole 2816 of the base member 28.

As shown in FIGS. 16-19, the eccentric pin 29 is formed of a first shaft portion 2902, a second shaft portion 2904 having an axis off-center with respect to an axis of the first shaft portion 2902 and connected to an end portion of the first shaft portion 2902, and a manipulation portion 2906 for rotational operation provided in an end portion of the second shaft portion 2904 and engageable with a tool such as a Phillips screwdriver, a hex wrench.

The eccentric pin 29 has its first shaft portion 2902 inserted into the eccentric pin insertion hole 2816 of the base member 28, whereby the first shaft portion 2902 extends in parallel with the optical axis of the projection lens 18 and is thus supported by the eccentric pin insertion hole 2816 so as to be rotatable around its axis.

Furthermore, the second shaft portion 2904 is inserted into the eccentric pin insertion hole 2412 of the support block 24, whereby the second shaft portion 2904 is supported by the eccentric pin insertion hole 2412 rotatably around its axis.

Through rotation of this eccentric pin 29, later-described image adjustment by rotation is made, and after completing the image adjustment by rotation, the support block 24 is fixed to the base member 28 through bolts, each having passed through the corresponding elongated hole 2408 to be screwed into the corresponding screw hole 2814 with male screw threads formed at its distal end portion, whereby the projector unit 10 is attached to the frame 30.

The base member 28 is attached to the mounting plate 60 as follows.

As shown in FIGS. 21, 22, 23, the supported surfaces 2820 of the base member 28 are arranged to face the support surface 6002 of the mounting plate 60. Then, each of the elongated holes 2822 and the two screw holes 2824 of the base member 28 are aligned with the corresponding elongated hole 6004 of the mounting plate 60, and also each of the eccentric pin insertion holes 2826 is aligned with the corresponding eccentric pin insertion hole 6006 of the mounting plate 60, to align the supported surfaces 2820 of the base member 28 with the support surface 6002 of the mounting plate 60.

Here, holders 70 shown in FIGS. 24, 25 and eccentric pins 80 shown in FIGS. 26-28 are attached to both the mounting plate 60 through the base member 28.

As shown in FIGS. 24, 25, each of the holders 70 is disposed so as to interpose a mounting plate 60 portion where the corresponding elongated hole 6004 is formed, in cooperation with the corresponding supported surfaces 2820.

The holder 70 has a mounting surface 7002 vertically extending along the front surface 6010, and an engageable piece 7004 projects from the mounting surface 7002. The engageable piece 7004 is to be inserted into the corresponding elongated holes 6004, 2822 so as not to play in their left-right direction.

Furthermore, screw insertion holes 7006 are formed as throughholes at both ends as viewed along the length of the holder 70.

The engageable piece 7004 of the holder 70 is inserted into the elongated holes 6004, 2822 from the front surface 6010 of the mounting plate 60, and under such condition, male threads of bolts (equivalent to claimed screw members) are inserted from the screw insertion holes 7006 of the holder 70 through the elongated holes 6004 of the mounting plate 60 to be screwed into the screw holes 2824 of the base member 28, whereby the base member 28 is attached to the mounting plate 60.

As a result, with the bolts being loosened from the screw holes 2824, the supported surfaces 2820 of the base member 28 become swingable around the first axial line over the support surface 6002 of the mounting plate 60.

Furthermore, the engageable piece 7004 of each of the holders 70 engages with the corresponding elongated holes 6004, 2822, whereby the movement of the base member 28 along the first axial line is blocked.

As shown in FIGS. 26-28, each of the eccentric pins 80 is formed of a first shaft portion 8002, a second shaft portion 8004 having an axis off-center with respect to an axis of the first shaft portion 8002 and connected to an end portion of the first shaft portion 8002, and a manipulation portion 8006 for rotational operation provided in an end portion of the second shaft portion 8004 and engageable with a tool such as a Phillips screwdriver, a hex wrench.

The eccentric pin 80 has its first shaft portion 8002 inserted into the corresponding eccentric pin insertion hole 2826 of the base member 28, whereby the first shaft portion 8002 extends in a direction crossing an extended surface of the corresponding supported surfaces 2820, and is thus supported by the eccentric pin insertion hole 2826 so as to be rotatable around its axis.

Furthermore, the second shaft portion 8004 is inserted into the corresponding eccentric pin insertion hole 6006 of the mounting plate 60, whereby the second shaft portion 8004 is supported by the eccentric pin insertion hole 6006 rotatably around its axis.

In the present embodiment, the support surface 6002 and the supported surfaces 2820 are disposed behind a portion of a front surface of the frame 30 and at a location closer to the above-mentioned front surface, below the screen 50.

And the manipulation portions 8006 are disposed such that an operator can rotate them from the portion of the front surface of the frame 30 below the screen 50.

Through rotation of these eccentric pins 80, later-described trapezoidal distortion adjustment is made, and after completing the trapezoidal distortion adjustment, the base member 28 is secured to the mounting plate 60 by the bolts, each having passed through the corresponding screw insertion hole 7006 of each of the holders 70 to be screwed into the corresponding screw hole 2824 with male screw threads formed at its distal end portion, whereby the projector unit 10 is attached to the frame 30 via the mounting plate 60.

Next, the image adjustment by rotation using the eccentric pin 29 will be described.

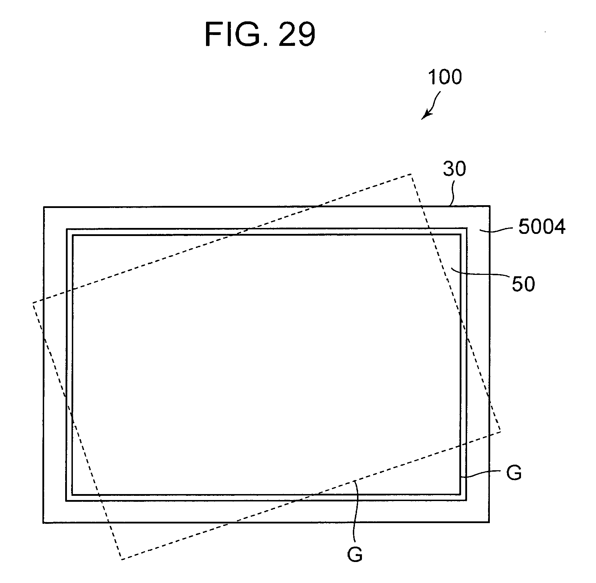

As shown in FIG. 29, when an image G projected onto the screen 50 by the projector unit 10 is skewed with respect to the screen 50 as shown by a broken line, first, the bolts inserted through the elongated holes 2408 to be screwed into the screw holes 2814 are loosened to make the image emergence side unit 10B rotatable.

Then, by properly holding the tool to the manipulation portion 2906 of the eccentric pin 29, the eccentric pin 29 is rotated.

As the eccentric pin 29 rotates, the second shaft portion 2904 of the eccentric pin 29 rotates around the first shaft portion 2902, whereby the support block 24 is oscillated around the shaft 2810 as a fulcrum with the supported surfaces 2406A sliding over the corresponding support surfaces 2812A of the base member 28, respectively, whereby an angle of rotation around the optical axis of the projection lens 18, of the image emergence side unit 10B is adjusted.

Therefore, as a result of such rotation of the eccentric pin 29, the rotation angle of the image emergence side unit 10B is adjusted such that the image G is no longer skewed on the screen 50 as shown by a solid line in FIG. 29 (i.e., such that four sides of the image G parallel the corresponding four sides of the screen 50, respectively).

After the adjustment, the bolts inserted through the elongated holes 2408 are tightened to fix the angle of rotation around the optical axis of the projection lens 18, of the image emergence side unit 10B.

With this operation, the image adjustment by rotation ends.

Note that a second support mechanism for supporting the image emergence side unit 10B with respect to the frame 30 rotatably around the optical axis of the projection lens 18 along the plane orthogonal to the optical axis is formed of the shaft 2810 provided on the base member 28 and the bearing hole 2410 provided in the support block 24.

Furthermore, an image adjusting mechanism by rotation for adjusting the angle of rotation around the optical axis of the projection lens 18 of the image emergence side unit 10B is formed of the eccentric pin 29 and the eccentric pin insertion holes 2412, 2816.

Furthermore, a second securing mechanism for loosening and tightening the image emergence side unit 10B with respect to the frame 30 is formed of the elongated holes 2408, the screw holes 2814, and the bolts.

Having such an image adjusting mechanism by rotation, the image G displayed on the screen 50 out of position in the rotational direction as shown by the broken line in FIG. 29 can be adjusted easily and reliably without requiring a large-scale mechanism for moving the entire projector unit 10 as in the conventional example, and thus with a simple configuration, which is hence advantageous in reducing the size, thickness, and cost.

Furthermore, since only the image emergence side unit 10B is moved for adjustment, it requires only an extremely small space for the movement compared with the adjustment by moving the entire projector unit 10 as in the conventional example, which is thus advantageous in reducing the size and thickness of the projection television apparatus 100.

Furthermore, since the image emergence side unit 10B is lightweight compared with the entire projector unit 10, force required for rotational adjustment of the image is also small, which thus reduces the labors of an operator and also increases efficiency of the image adjusting operation performed before shipment and after installation, and hence is extremely advantageous in reducing the cost of the projection television apparatus 100.

Next, the trapezoidal distortion adjustment using the eccentric pins 80 will be described.

Let FIG. 31 be used here again. When the image G projected onto the screen 6 by the projector unit 10 exhibits trapezoidal distortion with respect to the screen 6 as shown by the broken lines, first, the bolts inserted through the screw insertion holes 7006 of each of the holders 70 to be screwed into the screw holes 2824 are loosened to make the base member 28, i.e., the projector unit 10 swingable around the first axial line.

Then, by properly holding the tool to the manipulation portion 8006 of each of the eccentric pins 80, the eccentric pin 80 is rotated.

As the eccentric pin 80 rotates, the second shaft portion 8004 of the eccentric pin 80 rotates around the first shaft portion 8002, whereby the base member 28 has its supported surfaces 2820 oscillated around the first axial line with its supported surfaces 2820 sliding over the corresponding support surface 6002 of the mounting plate 60, whereby an angle of rotation around the first axial line of the projector unit 10 is adjusted.

Therefore, as a result of such rotation of the eccentric pins 80, the angle of rotation around the first axial line of the projector unit 10 is adjusted such that the trapezoidal distortion of the image G on the screen 6 is eliminated as shown by the solid line in FIG. 31 (i.e., such that the four sides of the image G parallel the corresponding four sides of the screen 6, respectively).

After the adjustment, the bolts inserted through the screw insertion holes 7006 of each of the holders 70 to be screwed into the screw holes 2824 are tightened to fix the angle of rotation around the first axial line of the projector unit 10.

With this operation, the trapezoidal distortion adjustment ends.

Note that a support mechanism for supporting the projector unit 10 with respect to the frame 30 rotatably around the first axial line orthogonal to the optical axis of the projection lens 18 and paralleling the upper or lower edge of the screen includes the support surface 6002 of the mounting plate 60 and the supported surfaces 2820 of the base member 28.

Furthermore, movement blocking means for blocking movement of the projector unit 10 along the first axial line with the supported surfaces 2820 supported by the support surface 6002 is formed of the engageable pieces 7004 of the holders 70 and the elongated holes 6004, 2822.

Furthermore, a trapezoidal distortion adjusting mechanism for adjusting the angle of rotation around the first axial line of the projector unit 10 is formed of the eccentric pins 80 and the eccentric pin insertion holes 6006, 2826.

Furthermore, a securing mechanism for loosening and tightening the projector unit 10 with respect to the frame 30 is formed of the holders 70, the elongated holes 6004, 2822, the screw holes 2824, and the bolts.

According to the present embodiment, the support mechanism for supporting the projector unit 10 with respect to the frame 30 around the first axial line orthogonal to the optical axis of the projection lens 18 and paralleling the upper edge 5020 or the lower edge 5022 of the screen 50 is provided, and the trapezoidal distortion adjusting mechanism for adjusting the angle of rotation around the first axial line of the projector unit 10 is provided, and further, the securing mechanism for loosening and tightening the projector unit 10 with respect to the frame 30 is provided.

Therefore, by adjusting the projector unit 10 by rotation around the first axial line orthogonal to the optical axis of the projection lens 18 and paralleling the upper edge 5020 or the lower edge 5022 of the screen 50, trapezoidal distortion can be reliably eliminated or at least reduced.

Furthermore, according to the present embodiment, unlike the complicated adjusting mechanism involving individual adjustment of the four corners of the tilting table as in the conventional example, the adjusting configuration is simplified, and thus trapezoidal distortion can be eliminated or at least reduced with a simple adjusting operation, which reduces the labors of an operator and also increases efficiency of image adjusting operation performed before shipment and after installation, and hence is extremely advantageous in reducing the cost of the projection television apparatus 100.

Furthermore, according to the present embodiment, the manipulation portions 8006 of the eccentric pins 80 of the trapezoidal distortion adjusting mechanism are configured such that the operator can rotate them from the front side of the portion of the front surface of the frame 30 below the screen 50. Thus, the operator can make trapezoidal distortion adjustment while viewing an image on the screen 50, and thus this configuration is advantageous in performing the trapezoidal distortion adjusting operation efficiently.

Note that the trapezoidal distortion adjusting mechanism is not limited to the one using the eccentric pins, but may include any known mechanism, such as a link mechanism and a gear mechanism. However, use of the eccentric pins 80 is advantageous in simplifying the structure and reducing the cost.

Furthermore, the case where the support mechanism for supporting the projector unit 10 with respect to the frame 30 rotatably around the first axial line orthogonal to the optical axis of the projection lens 18 and paralleling the upper edge 5020 or the lower edge 5022 of the screen 50 is formed of the cylindrical support surface 6002 and the supported surfaces 2820 has been described in the embodiment. However, various known structures may also be adoptable. For example, pivots may be disposed so as to project from both ends of the projector unit 10 along the first axial line, and these pivots may be rotatably supported by bearing holes of the frame 30. However, the support mechanism formed of the cylindrical support surface 6002 and the supported surfaces 2820 as in the embodiment is advantageous in simplifying the structure and reducing the cost.

Furthermore, the angle which the first optical path L1 forms with the second optical path L2 is not limited to 90°, but may include other angles as well.

### (Second Embodiment)

In the first embodiment, the case where the image forming means 14 is configured by use of reflective liquid crystal display units has been described. In a second embodiment, a case of using transmissive liquid crystal display units as the image forming means 14 will be described.

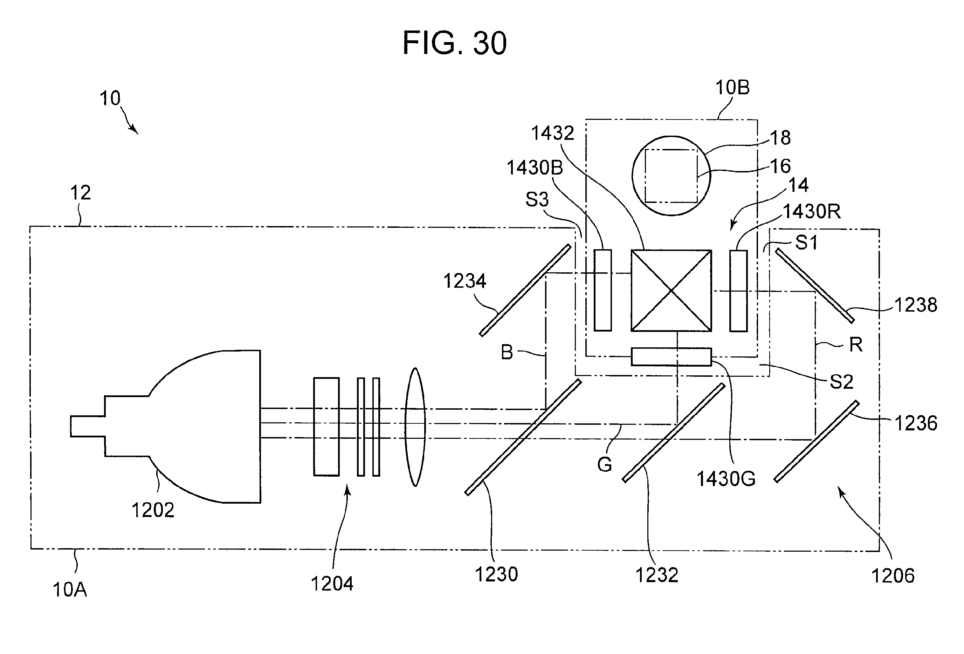

FIG. 30 is a diagram for explaining a configuration of a projector unit 10 in the second embodiment. In the following, parts and members similar to those in the first embodiment are given the same reference numerals.

As shown in FIG. 30, illuminating means 12 includes a light source 1202, illuminating optics 1204, and color separating optics 1206.

The color separating optics 1206 are formed of first and second dichroic mirrors 1230, 1232, and first to third mirrors 1234, 1236, 1238.

The first dichroic mirror 1230 is configured to transmit red (R) and green (G) light beams therethrough, and reflect a blue (B) light beam, of light beams guided from the illuminating optics 1204.

The second dichroic mirror 1232 is configured to transmit the red (R) light beam, and reflect the green (G) light beam, of the light beams having passed through the first dichroic mirror 1230.

Therefore, the light beams guided to the first dichroic mirror 1230 from the illuminating optics 1204 are separated into two groups of light beams, namely, the blue (B) light beam, and the red (R) and green (G) light beams, by the first dichroic mirror 1230.

The blue (B) light beam separated by the first dichroic mirror 1230 is reflected by the first mirror 1234.

Of the red (R) and green (G) light beams separated by the first dichroic mirror 1230, the green (G) light beam is reflected by the second dichroic mirror 1232.

Of the red (R) and green (G) light beams separated by the first dichroic mirror 1230, the red (R) light beam passes through the second dichroic mirror 1232, and reaches the third mirror 1238 via the second mirror 1236 to be reflected by the third mirror 1238.

In this way, the R, G, B light beams separated by the color separating optics 1206 are each emitted onto the image forming means 14 from the illuminating means 12.

The image forming means 14 includes three transmissive liquid crystal display units (LC panels) 1430 (1430R, 1430G, 1430B) for respectively displaying image information for the three colors, R, G, B, and a cross dichroic prism 1432 for generating a single image projection light beam by synthesizing the light beams having passed through the corresponding liquid crystal display units 1430 for modulation on the basis of the corresponding three color image information, respectively.

These three liquid crystal display units 1430R, 1430G, 1430B and the cross dichroic prism 1432 are integrally coupled.

Between the three liquid crystal display units 1430R, 1430G, 1430B of the image forming means 14 and portions of the illuminating means 12 faced by these three liquid crystal display units 1430R, 1430G, 1430B are clearances S1, S2, S3, respectively, whereby the image forming means 14 does not interfere with the illuminating means 12 due to play.

The three liquid crystal display units 1430R, 1430G, 1430B each have a display surface for displaying an image thereon, and further have an image signal (drive signal) and power for displaying the image on the display surface supplied thereto.

The blue (B) light beam exiting from the illuminating means 12 to the image forming means 14 enters the blue liquid crystal display unit 1430B, where the incident blue light beam passes therethrough to be thereby modulated on the basis of the corresponding image information, after which the modulated blue light beam is guided to the cross dichroic prism 1432.

The green (G) light beam exiting from the illuminating means 12 to the image forming means 14 enters the green liquid crystal display unit 1430G, where the incident green light beam passes therethrough to be thereby modulated on the basis of the corresponding image information, after which the modulated green light beam is guided to the cross dichroic prism 1432.

The red (R) light beam exiting from the illuminating means 12 to the image forming means 14 enters the red liquid crystal display unit 1430R, where the incident red light beam passes therethrough to be thereby modulated on the basis of the corresponding image information, after which the modulated red light beam is guided to the cross dichroic prism 1432.

The three color light beams guided to the cross dichroic prism 1432 are synthesized by the cross dichroic prism 1432 into a single image projection light beam.

An optical path of the image projection light beam extending from the image forming means 14 to a projection lens 18 is formed, similarly to that in the first embodiment, of a first optical path L1 linearly extending from the image forming means 14, a second optical path L2 aligned with the optical axis of the projection lens 18, and a reflecting surface 1602 of a reflecting mirror 16, disposed at a location where these optical paths cross, for bending these optical paths. An angle which the first optical path forms with the second optical path equals 90°.

Therefore, the image projection light beam guided from the cross dichroic prism 1432 is bent 90° upwards by the reflecting surface of the reflecting mirror 16, enters a reflecting mirror 40 (see FIG. 1) via the projection lens 18, and then is projected for image formation onto a back surface of a screen 50 by the reflecting mirror 40, whereby a color image is formed on a front surface of the screen 50.

Similarly to the first embodiment, in the second embodiment also, the projector unit 10 is attached to the frame 30 via the base member 28 and the mounting plate 60.

Furthermore, support mechanisms, image adjusting mechanisms by rotation, and securing mechanisms similar to those in the first embodiment are also provided.

In the second embodiment also, trapezoidal distortion can be eliminated or at least reduced reliably with a simple adjusting operation, which reduces the labors of an operator and also increases efficiency of image adjusting operation performed before shipment and after installation, and hence is extremely advantageous in reducing the cost of the projection television apparatus 100.

Note that the case where the image forming means 14 is formed of the three transmissive liquid crystal display units 1430R, 1430G, 1430B and the cross dichroic prism 1432 has been described in the second embodiment. However, the image forming means 14 is not limited to the above-mentioned embodiment, but may, of course, include various known configurations.

The present invention contains subject mater related to Japanese Patent Application No. JP2005-174296 filed in the Japanese Patent Office on June 14, 2005.

In summary a projection television apparatus includes: a frame; a screen; and a projector unit, for emitting an image projection light beam onto the screen; wherein said projector unit includes; illuminating means, image forming means for modulating light beams by image information, and a projection lens; an optical axis of the image projection light beam exiting from the image forming means is bent to an optical axis of the projection lens; the screen has horizontal upper or lower edges; a support mechanism for supporting the projector unit the frame rotatably around a first axial line orthogonal to the optical axis of the projection lens and parallel to the upper or lower edge of the screen is provided; a trapezoidal distortion adjusting mechanism for adjusting an angle of rotation around the first axial line of the projector unit is provided; and a securing mechanism for the projector unit with the frame is provided.

It should be understood by those skilled in the art that various modifications, combinations, sub-combinations and alterations may occur depending on design requirements and other factors insofar as they are within the scope of the appended claims or the equivalents thereof.

## Claims

1. A projection television apparatus comprising:
a frame;
a screen of a back projection type attached to a front surface of the frame; and
a projector unit, disposed in the frame, for emitting an image projection light beam onto the rear surface of the screen;
wherein said projector unit comprises;
illuminating means,
image forming means for modulating light beams exiting from the illuminating means on the basis of image information whereby to generate the image projection light beam for exit therefrom, and
a projection lens for projecting the image projection light beam onto the screen;
wherein an optical axis of the image projection light beam exiting from the image forming means is bent with respect to an optical axis of the projection lens;
wherein the screen has horizontally extending upper or lower edge at an upper or lower end thereof;
wherein a support mechanism for supporting the projector unit with respect to the frame rotatably around a first axial line orthogonal to the optical axis of the projection lens and parallel to the upper or lower edge of the screen is provided;
wherein a trapezoidal distortion adjusting mechanism for adjusting an angle of rotation around the first axial line of the projector unit is provided; and
wherein a securing mechanism for loosening and tightening the projector unit with respect to the frame is provided.

2. The projection television apparatus according to claim 1, wherein the support mechanism comprises: a support surface provided on the frame and extending over a cylindrical surface formed around the first axial line; and a supported surface provided on the projector unit, extending over the cylindrical surface formed around the first axial line, and engageable with the support surface.

3. The projection television apparatus according to claim 1, wherein the support mechanism comprises: a support surface provided on the frame and extending over a cylindrical surface formed around the first axial line; a supported surface provided on the projector unit, extending over the cylindrical surface formed around the first axial line, and engageable with the support surface; and movement blocking means for blocking movement of the projector unit along the first axial line, with the supported surface supported by the support surface.

4. The projection television apparatus according to claim 1, wherein the trapezoidal distortion adjusting mechanism includes an eccentric pin, the eccentric pin comprising: a first shaft portion extending in a direction crossing an extended surface of the supported surface or the support surface, and supported by a portion of the frame so as to be rotatable around an axis thereof; a second shaft portion connected to an end portion of the first shaft portion eccentrically with respect to the axis of the first shaft portion and rotatably coupled to a portion of the projector unit; and
a manipulation portion for rotational operation provided in the end portion of the first shaft portion or in an end portion of the second shaft portion.

5. The projection television apparatus according to claim 1,
wherein the support mechanism comprises; a support surface provided on the frame and extending over a cylindrical surface formed around the first axial line, and a supported surface provided on the projector unit, extending over the cylindrical surface formed around the first axial line, and engageable with the support surface, wherein the support surface and the supported surface are disposed behind a portion of a front surface of the frame and at a location closer to the front surface, below the screen; and
wherein the trapezoidal distortion mechanism includes an eccentric pin, the eccentric pin comprising: a first shaft portion extending in a direction crossing the front surface and supported by a portion of the frame so as to be rotatable around an axis thereof; a second shaft portion connected to an end portion of the first shaft portion as viewed in a longitudinal direction eccentrically with respect to the axis of the first shaft portion and rotatably coupled to a portion of the projector unit; and a manipulation portion provided in other end portion of the first shaft portion as viewed in the longitudinal direction and rotatably operatable for rotation from a front side of the portion of the front surface of the frame.

6. The projection television apparatus according to claim 2 or 3, wherein the projector unit is attached to a base member; the base member is attached to the frame; the support mechanism includes the base member; and the supported surface is provided on the base member.

7. The projection television apparatus according to claim 1, wherein:
the support mechanism includes: a support surface provided on the frame and extending over a cylindrical surface formed around the first axial line; and supported surface provided on the projector unit, extending over the cylindrical surface formed around the first axial line, and engageable with the support surface;
the projector unit is attached to a base member; the base member is attached to the frame; the support mechanism includes the base member; and the supported surface is provided on the base member; and
the securing mechanism includes: an elongated hole provided in a portion of the frame where the support surface is formed and circumferentially extending around the first axial line; a holder for interposing the portion of the frame where the elongated hole is formed, in cooperation with the supported surface; a screw insertion hole formed in the holder; and a screw member passing through the screw insertion hole and the elongated hole to be screwed into a portion of the projector unit.

8. The projection television apparatus according to claim 1, wherein:
the support mechanism includes: a support surface provided on the frame and extending over a cylindrical surface formed around the first axial line; and supported surface provided on the projector unit, extending over the cylindrical surface formed around the first axial line, and engageable with the support surface;
the projector unit is attached to a base member; the base member is attached to the frame; the support mechanism includes the base member; and the supported surface is provided on the base member; and
the securing mechanism includes: an elongated hole provided in a portion of the frame where the support surface is formed and circumferentially extending around the first axial line; a holder for interposing the portion of the frame where the elongated hole is formed, in cooperation with the supported surface, and extending along the elongated hole; a plurality of screw insertion holes formed at intervals in a direction along which the holder extends; and screw members passing through the screw insertion holes and the elongated hole to be screwed into a portion of the projector unit.

9. The projection television apparatus according to claim 1, wherein:
the support mechanism includes: a support surface provided on the frame and extending over a cylindrical surface formed around the first axial line; and supported surface provided on the projector unit, extending over the cylindrical surface formed around the first axial line, and engageable with the support surface;
the projector unit is attached to a base member; the base member is attached to the frame; the support mechanism includes the base member; and the supported surface is provided on the base member;
the securing mechanism includes: an elongated hole provided in a portion of the frame where the support surface is formed and circumferentially extending around the first axial line; a holder for interposing the portion of the frame where the elongated hole is formed, in cooperation with the supported surface; a screw insertion hole formed in the holder; and a screw member passing through the screw insertion hole and the elongated hole to be screwed into a portion of the projector unit;
an elongated hole, which circumferentially extends around the first axial line to be aligned with an elongated hole of the frame, is formed in a portion of the base member where the supported surface is formed; and
an engageable piece, which passes through the elongated hole of the frame to engage with the elongated hole of the base member, and blocks movement of the base member along the first axial line, is formed on the holder so as to project therefrom.

10. The projection television apparatus according to claim 1, wherein the optical path of the image projection light beam extending from the image forming means to the projection lens includes: a first optical path linearly extending from the image forming means; a second optical path coaxial with the optical axis of the projection lens; and a reflecting surface, disposed at a location where the first optical path and the second optical path cross, for bending the optical paths.

11. The projection television apparatus according to claim 1, wherein an angle which the first optical path forms with the second optical path includes 90°.

12. The projection television apparatus according to claim 1, wherein:
a part extending from the image forming means to the projection lens is separated from a light source side unit which is a remaining part of the projector unit excluding the part extending from the image forming means to the projection lens, and the part extending from the image forming means to the projection lens is formed as an integrally coupled body into an image emergence side unit;
a second support mechanism for supporting the image emergence side unit with respect to the frame rotatably around the optical axis of the projection lens along a plane orthogonal to the optical axis is provided;
an image adjusting mechanism by rotation for adjusting an angle of rotation around the optical axis of the projection lens, of the image emergence side unit is provided; and
a second securing mechanism for loosening and tightening the image emergence side unit with respect to the frame is provided.

13. The projection television apparatus according to claim 1, wherein:
the projector unit is attached to a base member; the base member is attached to the frame; the second support mechanism includes the base member; and the supported surface is provided on the base member; and
the image emergence side unit includes a support block for supporting the part extending from the image forming means to the projection lens; and the second support mechanism, the image adjusting mechanism by rotation, the second securing mechanism are provided so as to extend from the base member to the support block.

14. The projection television apparatus according to claim 1, wherein the image forming means includes a transmissive or reflective liquid crystal display unit.

15. The projection television apparatus according to claim 1, wherein a reflecting surface for reflecting the image projection light beam exiting from the projection lens for emission onto a back surface of the screen is provided between the projector unit and the screen.
